Europäisches Patentamt

European Patent Office

Office européen des brevets

(19)

(11) Veröffentlichungsnummer: **0 163 765**
**A2**

# (12) EUROPÄISCHE PATENTANMELDUNG

(21) Anmeldenummer: **84112907.5**

(22) Anmeldetag: **26.10.84**

(51) Int. Cl.⁴: **A 01 F 25/00, A 23 B 7/14**

(30) Priorität: **08.06.84 DE 8417411 U**

(43) Veröffentlichungstag der Anmeldung: **11.12.85**
**Patentblatt 85/50**

(84) Benannte Vertragsstaaten: **AT BE CH DE FR GB IT LI NL SE**

(71) Anmelder: **Kienle, Waldemar, sen., Mühlackerstrasse 31, D-7409 Dusslingen (DE)**
Anmelder: **Kienle, Waldemar, jun., Austrasse 56, D-7409 Dusslingen (DE)**

(72) Erfinder: **Kienle, Waldemar, sen., Mühlackerstrasse 31, D-7409 Dusslingen (DE)**
Erfinder: **Kienle, Waldemar, jun., Austrasse 56, D-7409 Dusslingen (DE)**

(74) Vertreter: **Möbus, Rudolf, Dipl.-Ing., Hindenburgstrasse 65, D-7410 Reutlingen (DE)**

(54) **Vorrichtung zum Einlagern von Früchten.**

(57) Die zur Einlagerung von Früchten, wie Kartoffeln und Tafelobst, vorgesehene Vorrichtung weist mindestens eine Einlagerungskammer auf, die mittels eines Kühlaggregats (20) gekühlt ist, von außen über Belüftungsöffnungen (18, 19) belüftbar ist und unter dem Einfluß einer Befeuchtungsvorrichtung (17) steht, so daß die Früchte bei einstellbarer Temperatur und Luftfeuchtigkeit belüftet gelagert sind.

EP 0 163 765 A2

## Vorrichtung zum Einlagern von Früchten

Die Erfindung betrifft eine Vorrichtung zum Einlagern von Früchten, mit mindestens einer durch eine Türe oder einen Deckel verschließbaren und durch ein Kühlaggregat beeinflußten Einlagerungskammer mit einer wärmedämmend gestalteten Wandung.

Einlagerungsvorrichtungen für Lebensmittel sind in Form von Kühlschränken und Tiefkühltruhen seit langem bekannt. Diese Vorrichtungen eignen sich jedoch nicht zum Einlagern von Früchten, wie Kartoffeln, Tafelobst und Knollengemüse, zu deren Frischhaltung nicht nur eine Temperaturreduzierung ausreicht, sondern welche einer Belüftung und einer relativ feuchten Umgebung bedürfen. Feuchtkellerräume, welche diese Lagerbedingungen erfüllen, sind aber in der Regel in Neubauten nicht mehr vorhanden.

Der Erfindung liegt die Aufgabe zugrunde, eine Vorrichtung zu schaffen, welche ein Einlagern der vorstehend genannten Früchte auch bei fehlendem Feuchtkellerraum in Gebäuden ermöglicht.

P 4687 EU

0163765

Die gestellte Aufgabe wird mit einer Vorrichtung der eingangs genannten Art erfindungsgemäß dadurch gelöst, daß in der Einlagerungskammer der Vorrichtung mindestens eine Befeuchtungsvorrichtung angeordnet ist und in der Wandung der Einlagerungskammer Belüftungsöffnungen ausgebildet sind. Zweckmäßig können die Befeuchtungsvorrichtung und auch die Belüftungseinrichtung in Abhängigkeit von der in der Einlagerungskammer herrschenden Luftfeuchtigkeit und/oder Temperatur steuerbar sein.

Die Vorrichtung erlaubt die biologische Einlagerung von Kartoffeln, Obst und Knollengemüsen bei günstigsten einstellbaren klimatischen Bedingungen. Die Kühlung der Einlagerungskammer oder Einlagerungskammern kann mittels eines von Kühlschränken her bekannten thermostatgesteuerten Kühlaggregats erfolgen, das wie bei Kühlschränken oder Tiefkühltruhen im Vorrichtungsgehäuse angeordnet werden kann. Die mindestens eine Befeuchtungsvorrichtung kann vorteilhafterweise in eine Nische in der Wandung der Einlagerungskammer eingesetzt sein und eine Bodenwanne aufweisen, in welcher ein mit Flüssigkeit tränkbarer Einsatz angeordnet ist und die unmittelbar oder über eine Rohr- oder Schlauchleitung mit einem außerhalb der Einlagerungskammer der Vorrichtung angeordneten Flüssigkeitsspeicherbehälter verbunden ist. Die zur Einlagerungskammer hin offene Nische kann zweckmäßig durch einen verstellbaren Deckel vollständig oder teilweise verschließbar sein, wobei die Verstellung dieses Deckels - wie auch die mögliche Verstellung von vor den Belüftungsöffnungen angeordneten Blenden - mittels feuchtigkeits- und/oder temperaturabhängig arbeitender Antriebsvorrichtungen erfolgen kann.

P 4687 EU

- 3 -

C163765

Die einzulagernden Früchte werden in der Einlagerungskammer locker und mit ausreichendem Belüftungsabstand von den Kammerwandungen gestapelt, wozu die Einlagerungskammern vorteilhafterweise mit Gittereinsätzen in Form von Gitterkörben versehen sein können, beispielsweise mit aus Holzleisten, Holzspänen oder Weidengeflecht gefertigten Einsatzkörben.

Nachfolgend wird ein Ausführungsbeispiel einer erfindungsgemäß ausgebildeten Vorrichtung anhand der beiliegenden Zeichnung näher erläutert.

Im einzelnen zeigen:

Fig. 1          eine perspektivische Darstellung der Vorrichtung von ihrer Vorderseite her;

Fig. 2          eine perspektivische Darstellung der Vorrichtung von ihrer Rückseite her;

Fig. 3          einen Teilschnitt durch eine mit einer Befeuchtungsvorrichtung versehene Seitenwandung der Vorrichtung;

Fig. 4          eine Teilaufsicht der Innenseite einer mit einer Befeuchtungsvorrichtung versehenen Seitenwandung.

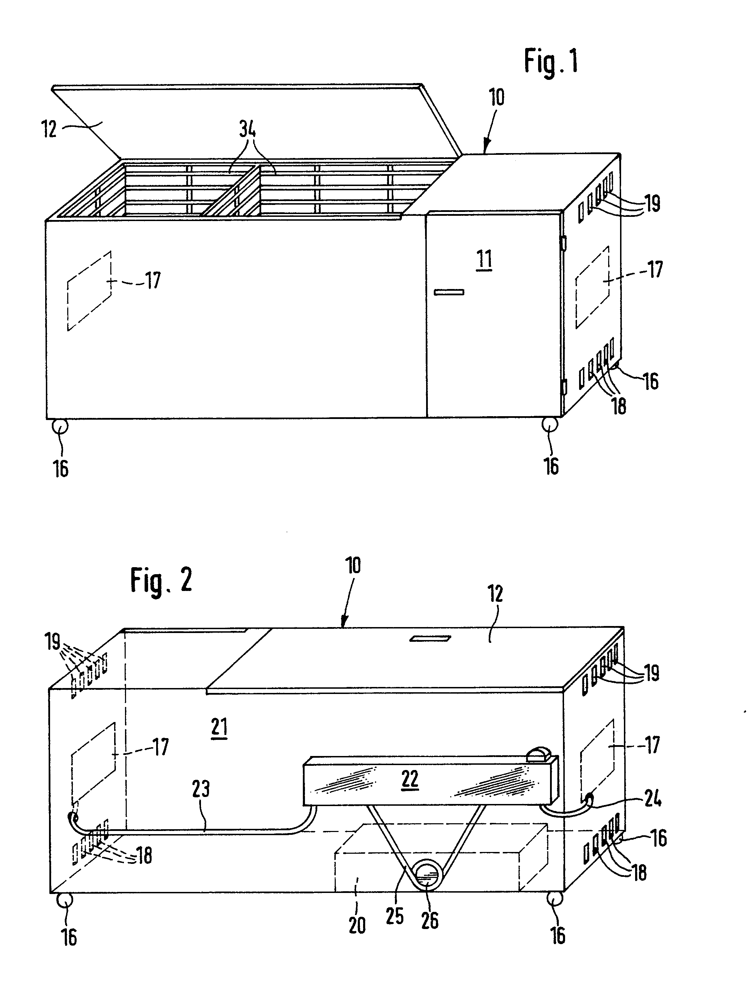

Die Fig. 1 und 2 zeigen eine als Haushaltsgerät vorgesehene Vorrichtung zum Einlagern von Früchten. Sie besitzt ein quaderförmiges Gehäuse 10 und ist in einen durch eine Schwenktüre 11 auf der Vorderseite des Gehäuses 10

P 4687 EU

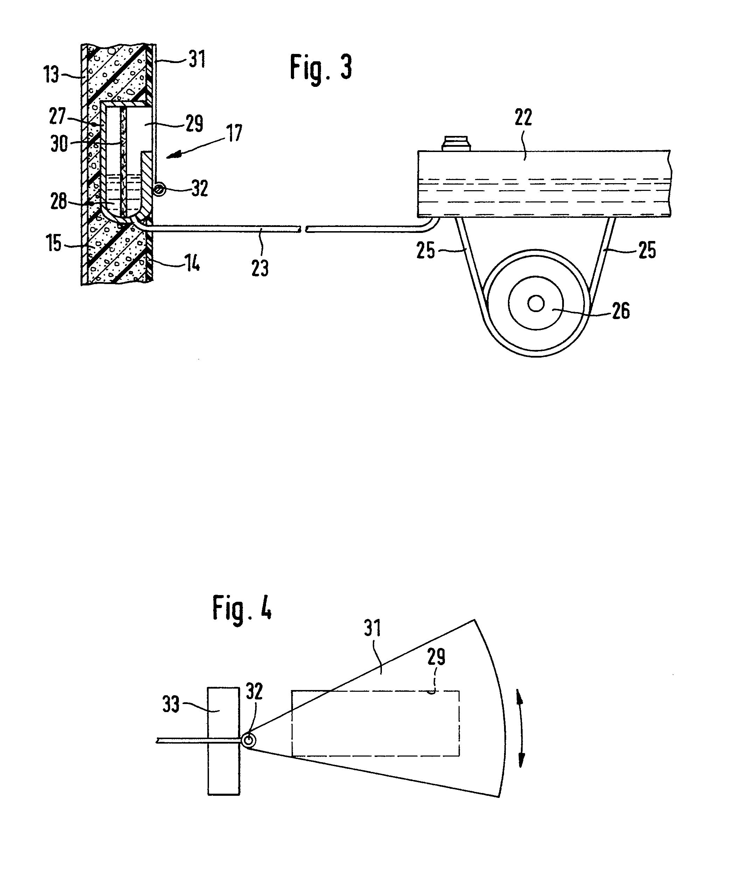

zugänglichen Schrankteil und in einen durch einen hochklappbaren oberen Deckel 12 verschlossenen Truhenteil
unterteilt. Alle Wandungen des Gehäuses 10, einschließlich der Schranktüre 11 und des Deckels 12, sind als
Doppelwandungen mit Wärmeisolationsfüllung ausgebildet.
Die aus der Schnittdarstellung der Fig. 3 ersichtliche
Außenseite der Wandung ist beispielsweise aus kunststoffbeschichtetem Stahlblech 13, und die Innenseite der
Wandung ist durch eine Kunststoffplatte 14 gebildet, während der Zwischenraum mit Kunststoffschaum 15 oder einem
anderen wärmeisolierenden Füllmaterial ausgefüllt ist.
Das Gehäuse weist einen nicht näher dargestellten Rahmen
aus feuerverzinkten Stahlprofilteilen auf, an welchem die
Wandungen verankert sind. Das Gehäuse 10 ist auf Rollen
16 verfahrbar gelagert.

In beiden Einlagerungskammern des Gerätes 10, nämlich in
dem durch den Deckel 12 verschließbaren Truhenraum und in
dem durch die Türe 11 verschließbaren Schrankraum, ist
jeweils eine Befeuchtungsvorrichtung 17 angeordnet, die
jeweils in eine der Seitenwandungen des Gerätes 10 eingesetzt ist. In den gleichen Seitenwandungen sind untere
Belüftungsöffnungen 18 und obere Belüftungsöffnungen 19
zum Belüften der Einlagerungskammern ausgebildet. Unterhalb des Truhenraumes ist im Gehäuse 10 ein in Fig. 2 mit
gestrichelten Linien eingezeichnetes Kühlaggregat 20 ähnlich wie bei Tiefkühltruhen untergebracht. Die Kühlelemente dieses Kühlaggregates 20 sind in den beiden Einlagerungskammern in nicht näher dargestellter, von Tiefkühltruhen her bekannter Weise beispielsweise im Bereich
von Vorderwandung und Rückwandung des Gerätes 10 angeordnet. Unterhalb der Kühlelemente kann eine Auffangrinne

P 4687 EU

für anfallendes Kondenswasser angebracht sein, die über
nicht dargestellte Verbindungsschläuche mit einem außen
auf der Rückseite 21 des Gerätes 10 angeordneten, aus
Fig. 2 ersichtlichen durchsichtigen Flüssigkeitssammelbehälter 22 verbunden sind, der zu der Befeuchtungseinrichtung des Gerätes gehört. Dieser Flüssigkeitssammelbehälter 22 ist über eine Rohrleitung 23 mit der einen und
über eine Rohrleitung 24 mit der anderen der beiden Befeuchtungsvorrichtungen 17 verbunden. Eine Rohrleitungsschleife 25 führt vom Boden des Flüssigkeitssammelbehälters 22 zu dem Motor 26 des Kühlaggregats 20. Die Rohrleitung 25 ist in Windungen um das Gehäuse der Motors 26
gelegt und nimmt die vom Motor erzeugte Wärme zur Temperierung der im Sammelbehälter 22 enthaltenen Flüssigkeit
auf.

Die Fig. 3 und 4 zeigen Einzelheiten der Befeuchtungsvorrichtung 17. Das Gehäuse 27 der Befeuchtungsvorrichtung
17, das auch als von außen in eine Öffnung der Seitenwandung einsetzbar ausgebildet sein kann, weist eine Bodenwanne 28 und eine obere seitliche Öffnung 29 auf. Die
Bodenwanne 28 ist unmittelbar oder über eine Rohrleitung
23 oder 24 mit dem Flüssigkeitssammelbehälter 22 verbunden, der auf der Rückwandung 21 des Gehäuses 10 so angeordnet ist, daß der Flüssigkeitsspiegel in der Bodenwanne
28 nicht bis zur Öffnung 29 des Gehäuses 27 der Befeuchtungsvorrichtung 17 ansteigen kann. Im Gehäuse ist ein
aus der Bodenwanne 28 aufragender, mit Flüssigkeit tränkbarer Einsatz 30 angeordnet, der eine große Verdunstungsoberfläche bildet und von welchem aus die Feuchtigkeit
durch die Öffnung 29 in die zugeordnete Einlagerungskammer abgegeben wird. Die Feuchtigkeitsabgabe wird durch

P 4687 EU

eine auf der Innenseite 14 der Einlagerungskammer um eine
Achse 32 verschwenkbare Klappe 31 geregelt, welche gemäß
Fig. 4 die Öffnung 29 des Gehäuses 27 der Befeuchtungsvorrichtung 17 abdecken kann. Die Schwenkbewegung der
Klappe 31 wird mittels einer nur schematisch angedeuteten Antriebsvorrichtung 33 bewirkt. Hierbei kann es sich
beispielsweise um eine elektromagnetische oder Bimetallgesteuerte Antriebsvorrichtung handeln, die in Abhängigkeit von der in der Einlagerungskammer durch einen nicht
dargestellten Fühler gemessenen Luftfeuchtigkeit betätigt
wird. Der Einzelaufbau dieser Antriebsvorrichtung 33
interessiert hier nicht. In ähnlicher Weise können vor
den Belüftungsöffnungen 18 und/oder 19 ebenfalls verstellbare Blenden angeordnet sein.

Im Innern der beiden Einlagerungskammern sind die eingelagerten Früchte in Gittereinsätzen mit Abstand von der
Kammerwandung untergebracht. Aus Fig. 1 sind zwei in den
Truhenraum eingesetzte, aus Holz gefertigte Gitterbehälter 34 ersichtlich.

Die Vorrichtung kann in unterschiedlichen Größen als
Einzelgerät oder als Kombinationsgerät mit mehreren Einlagerungskammern hergestellt werden. Für Kartoffeln und
Obst hat sich als vorteilhaft erwiesen, die Innentemperatur der Einlagerungskammern auf +4°C einzuregeln und eine
Luftfeuchtigkeit von 90 % zu halten.

/Z

P 4687 EJ

P a t e n t a n s p r ü c h e :

1. Vorrichtung zum Einlagern von Früchten, mit mindestens
einer durch eine Türe (11) oder einen Deckel (12) verschließbaren, durch ein Kühlaggregat (20) beeinflußten
Einlagerungskammer mit einer wärmedämmend gestalteten
Wandung (13 - 15), dadurch gekennzeichnet, daß in der
Einlagerungskammer mindestens eine Befeuchtungsvorrichtung (17) angeordnet ist und in der Wandung der
Einlagerungskammer Belüftungsöffnungen (18, 19) ausgebildet sind.

2. Einlagerungsvorrichtung nach Anspruch 1, dadurch gekennzeichnet, daß die Befeuchtungsvorrichtung ein in
eine Nische in der Wandung der Einlagerungskammer einsetzbares Gehäuse (27) mit einer Bodenwanne (28) aufweist, in welcher ein mit Flüssigkeit tränkbarer Einsatz (30) angeordnet ist und die unmittelbar oder über
eine Rohr- oder Schlauchleitung (23, 24) mit einem
außerhalb der Einlagerungskammer angeordneten Flüssigkeitsspeicherbehälter (22) verbunden ist.

3. Einlagerungsvorrichtung nach Anspruch 1 und 2, dadurch
gekennzeichnet, daß das Gehäuse (27) der Befeuchtungsvorrichtung (17) eine durch einen verstellbaren Deckel
(31) voll- oder teilverschließbare Öffnung (29) aufweist.

P 4687 EU

4. Einlagerungsvorrichtung nach einem der Ansprüche 1 bis 3, dadurch gekennzeichnet, daß der Deckel (31) der Befeuchtungsvorrichtung (17) und/oder an den Belüftungsöffnungen (18, 19) vorgesehene Blenden mit in Abhängigkeit von der Luftfeuchtigkeit und/oder Temperatur in der Einlagerungskammer steuerbaren Antriebsvorrichtungen (33) zu ihrer Verstellung gekoppelt sind.

5. Einlagerungsvorrichtung nach einem der Ansprüche 1 bis 4, dadurch gekennzeichnet, daß zur Flüssigkeitstemperierung eine Verbindungsleitung (25) des Flüssigkeitsspeicherbehälters (22) über einen wärmeabgebenden Teil (Motor 26) des Kühlaggregates (20) geführt ist.

6. Einlagerungsvorrichtung nach einem der Ansprüche 1 bis 5, dadurch gekennzeichnet, daß die Einlagerungskammer in an sich bekannter Weise mindestens einen Gittereinsatz (34) zur Aufnahme der einzulagernden Früchte aufweist.

0163765

Fig.1

Fig. 2

0163765

**Fig. 3**

13
31
27
29
30
17
28
32
15
14
23
22
25
25
26

**Fig. 4**

33
32
31
29